(19) **Europäisches Patentamt**
**European Patent Office**
**Office européen des brevets**

(11) **EP 2 187 178 B1**

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(51) Int Cl.:
*G01D 5/34* *(2006.01)*        *G02B 5/30* *(2006.01)*

(21) Anmeldenummer: **08019864.1**

(22) Anmeldetag: **13.11.2008**

(54) **Verfahren und Vorrichtung zur Messung des Drehwinkels eines rotierenden Objektes**

Method and device for measuring the rotational angle of a rotating object

Procédé et dispositif destinés à la mesure de l'angle de rotation d'un objet tournant

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**19.05.2010 Patentblatt 2010/20**

(73) Patentinhaber: **SICK STEGMANN GmbH**
**78166 Donaueschingen (DE)**

(72) Erfinder:
• **Siraky, Josef**
  **78166 Donaueschingen (DE)**
• **Johnson, Mark**
  **Lymm**
  **Cheshire WA13 9NQ (GB)**

(74) Vertreter: **Modrow, Stephanie**
**Westphal, Mussgnug & Partner**
**Patentanwälte**
**Am Riettor 5**
**78048 Villingen-Schwenningen (DE)**

(56) Entgegenhaltungen:
**US-A- 3 427 108      US-A- 4 650 996**
**US-A- 4 958 072      US-A- 5 073 711**
**US-A- 5 424 535**

**Beschreibung**

Die Erfindung betrifft ein Verfahren und eine Vorrichtung zur Messung des Drehwinkels zwischen zwei relativ zueinander rotierenden Objekten.

Für viele Anwendungen ist es erforderlich, den Drehwinkel eines rotierenden Objektes zu messen. Im Allgemeinen wird dabei der Drehwinkel des rotierenden Objektes in Bezug auf ein feststehendes Objekt gemessen, z.B. der Drehwinkel einer rotierenden Welle in Bezug auf ein feststehendes Motoren- oder Maschinenteil. Die Erfindung umfasst aber auch solche fälle, bei welchen sich ein rotierendes Objekt gegenüber einem zweiten rotierenden Objekt dreht und der relative Drehwinkel zwischen den zwei Objekten gemessen werden soll. Die Messung des Drehwinkels umfasst erfindungsgemäß auch die Messung von aus dem Drehwinkel abgeleiteten Größen, wie z.B. der Winkelgeschwindigkeit und der Winkelbeschleunigung. Weiter umfasst die Messung des Drehwinkels gemäß der Erfindung auch die Fälle, bei welchen eine lineare Bewegung, z.B. über ein Getriebe, in eine Rotationsbewegung umgesetzt wird und über den Drehwinkel der Rotationsbewegung die Position, die Geschwindigkeit, die Beschleunigung usw. der linearen Bewegung gemessen werden.

Zur Messung des Drehwinkels ist es bekannt, eine der Drehbewegung zugeordnete Maßverkörperung abzutasten, wobei diese Maßverkörperung absolut codiert sein kann oder inkremental abgetastet wird. Insbesondere ist es auch bekannt, die Polarisation des Lichtes zur Drehwinkelmessung auszunützen. Dabei wird von einem Sender mittels eines Polarisators linear polarisiertes Licht ausgesandt, welches durch einen sich entsprechend dem rotierenden Objekt drehenden Analysator in einen Empfänger gelangt. Steht der Analysator mit seiner Polarisationsebene parallel zum Polarisator, so gelangt das Licht in den Empfänger, während kein Licht in den Empfänger gelangt, wenn die Polarisationsebene des Analysators senkrecht zur Polarisationsebene des ausgesandten Lichts steht. Der Empfänger liefert somit ein vom Drehwinkel des Analysators und damit vom Drehwinkel des rotierenden Objektes abhängiges Signal.

Bei einer aus der DE 10 2005 031 966 A1 bekannten Anordnung wird von einem Sender unpolarisiertes Licht ausgesandt, welches auf einen sich mit dem rotierenden Objekt drehenden Polarisationsfilter (Polfilter) trifft. Das durch den Polfilter hindurchtretende Licht wird dadurch polarisiert, wobei sich seine Polarisationsebene mit dem Polfilter dreht. Das Licht trifft auf einen Empfänger, an dessen Lichteintrittsseite vier Polfilter in einem Array angeordnet sind, deren Polarisationsebenen jeweils um 45° gegeneinander verdreht sind. Jeweils nach Drehung des rotierenden Polfilters um 45° fällt dessen Polarisationsebene mit der Polarisationsebene eines Polfilters des Empfängers zusammen, so dass sich ein Maximum der empfangenen Lichtintensität und somit ein Maximum des Empfängersignals ergibt.

Bei einer aus der DE 201 02 192 U1 bekannten Anordnung sendet ein Sender linear polarisiertes Licht aus, welches auf einen mit dem rotierenden Objekt rotierenden Polfilter mit einem dahinter angeordneten Reflektor auftrifft. Zwei Empfänger mit um 90° gegeneinander gedrehten Polfiltern nehmen das reflektierte Licht auf, wobei die Signale der beiden Empfänger ein vom Drehwinkel des Objektes abhängiges Signal erzeugen.

Der Erfindung liegt die Aufgabe zu Grunde, ein Verfahren und eine Vorrichtung zur Messung des Drehwinkels zwischen zwei relativ zueinander rotierenden Objekten mit Ausnützung der Polarisation des Lichtes zur Verfügung zu stellen, welche eine verbesserte Signalauswertung ermöglichen.

Diese Aufgabe wird erfindungsgemäß gelöst durch ein Verfahren mit den Merkmalen des Patentanspruchs 1 bzw. durch eine Vorrichtung mit den Merkmalen des Patentanspruchs 4.

Vorteilhafte Ausführungen der Erfindung sind in den jeweils rückbezogenen Ansprüchen angegeben.

Erfindungsgemäß sendet der Sender vier linear polarisierte Lichtstrahlen aus, deren Polarisationsebenen jeweils um 45° gegeneinander verdreht sind. Wenn sich der Analysator und der Sender entsprechend der Drehung des zu messenden rotierenden Objektes gegeneinander verdrehen, kommen somit die Polarisationsebenen der polarisierten Lichtstrahlen des Senders nacheinander mit der Polarisationsebene des Analysators zur Deckung, so dass sich eine vom Drehwinkel abhängige Intensität des auf den Empfänger auftreffenden Lichtes ergibt. Zusätzlich werden nun noch die Intensitäten der vom Sender ausgestrahlten Lichtstrahlen moduliert, wobei die vom Sender ausgesendeten Lichtstrahlen jeweils um 90° gegeneinander phasenverschoben in ihrer Intensität moduliert werden. Die auf den Empfänger auftreffende Lichtintensität und damit das Empfängersignal werden somit zusätzlich zu der Drehwinkelabhängigkeit auch noch durch die Intensitätsmodulation der Lichtstrahlen beeinflusst. Das Signal des Empfängers, welches der auf den Empfänger auftreffenden Lichtintensität entspricht hängt somit von der Modulationsfrequenz der vom Sender ausgesandten Lichtstrahlen und vom zu messenden Drehwinkel ab. Insbesondere ergibt sich ein Signal des Empfängers, welches die Modulationsfrequenz der vom Sender ausgestrahlten Lichtstrahlen enthält und entsprechend dem zu messenden Drehwinkel in der Phase verschoben ist.

Für die Auswertung der Signale des Empfängers können einfache trigonometrische Funktionen für die Modulation der Intensität der ausgestrahlten Lichtstrahlen gewählt werden und ebenso stehen die Polarisationsebenen der ausgestrahlten Lichtstrahlen in einfachen trigonometrischen Beziehungen zueinander.

Im Hinblick auf den Aufwand und im Hinblick auf die vorteilhafte Auswertung der Signale werden vier linear polarisierte Lichtstrahlen vom Sender ausgesendet, deren Intensität jeweils vorzugsweise sinusförmig moduliert wird, wobei die Phasenverschiebung zwischen den Modulationen der einzelnen Lichtstrahlen jeweils 90° beträgt. Die Polarisationsebenen dieser Lichtstrahlen sind dabei jeweils um 45° gegeneinander verdreht.

Grundsätzlich kann die erfindungsgemäße Lösung in der Weise realisiert werden, dass sich der Sender in Abhängigkeit von dem rotierenden Objekt dreht und der Analysator stillsteht oder dass der Sender stillsteht, während sich der Analysator in Abhängigkeit von dem rotierenden Objekt dreht.

Wenn sich der Sender in Abhängigkeit von dem rotierenden Objekt dreht, muss eine geeignete Energieeinspeisung zu dem rotierenden Sender vorgesehen werden. Die ortsfeste Anordnung des Analysators erlaubt eine einfache ortsfeste Anordnung des Empfängers hinter dem Polfilter des Analysators. In der einfachsten Ausführung kann der Polfilter unmittelbar auf der Oberfläche des Empfängers angeordnet werden.

Wird der Sender ortsfest angeordnet, so ist die Energieeinspeisung zu dem Sender einfacher. Der Analysator dreht sich dabei entsprechend der Drehung des rotierenden Objektes. Bei einem sich mit dem Analysator drehenden Empfänger ergeben sich Schwierigkeiten mit der Übertragung der analogen Empfängersignale. Es wird daher eine Ausführung bevorzugt, bei welcher sich nur der Analysator dreht und das durch den Analysator hindurchtretende Licht auf einen feststehend angeordneten Empfänger umgelenkt wird.

Im Folgenden wird die Erfindung anhand von in der Zeichnung dargestellten Ausführungsbeispielen näher erläutert. Es zeigen:

Fig. 1    in einer perspektivischen Darstellung schematisch eine erste Ausführung der Vorrichtung,

Fig. 2    in einem Diagramm die Abhängigkeit der von dem Empfänger empfangenem Lichtintensität von der Modulationsfrequenz und dem Drehwinkel,

Fig. 3    in einem Diagramm den Zusammenhang zwischen dem Drehwinkel und der Phasenverschiebung des Empfängersignals,

Fig. 4    in einem schematischen Axialschnitt die Vorrichtung der Figur 1,

Fig. 5    in einem entsprechenden schematischen Axialschnitt eine zweite Ausführung,

Fig. 6    in einem entsprechenden schematischen Axialschnitt eine dritte Ausführung und

Fig. 7    in einem entsprechenden schematischen Axialschnitt eine vierte Ausführung.

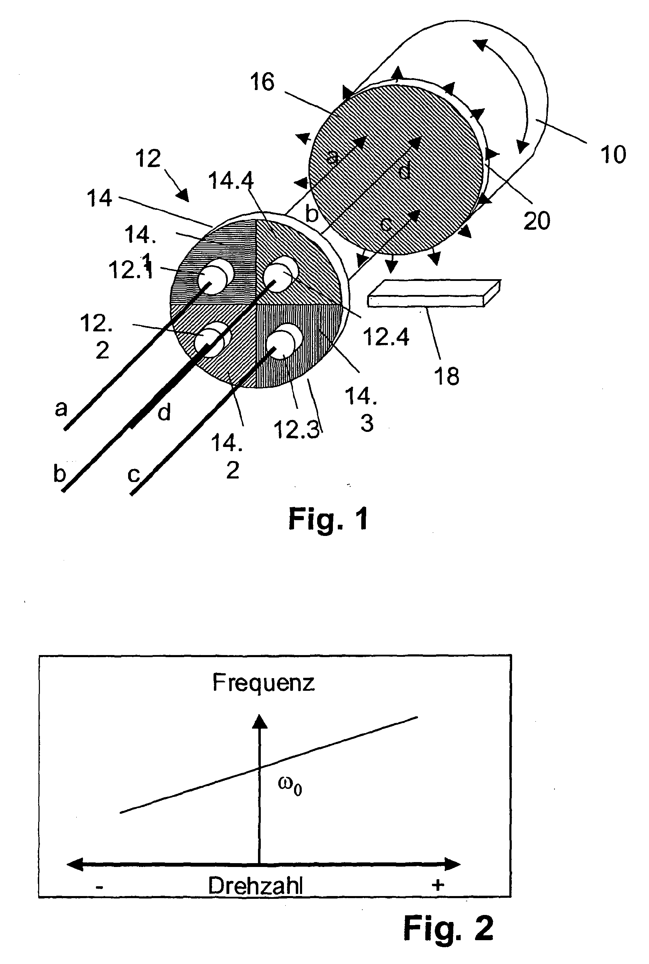

Das Grundprinzip der Erfindung wird anhand der Figur 1 in einer Ausführung erläutert, bei welcher ein Sender vier linear polarisierte Lichtstrahlen aussendet, deren Polarisationsebenen jeweils um 45° gegeneinander verdreht sind.

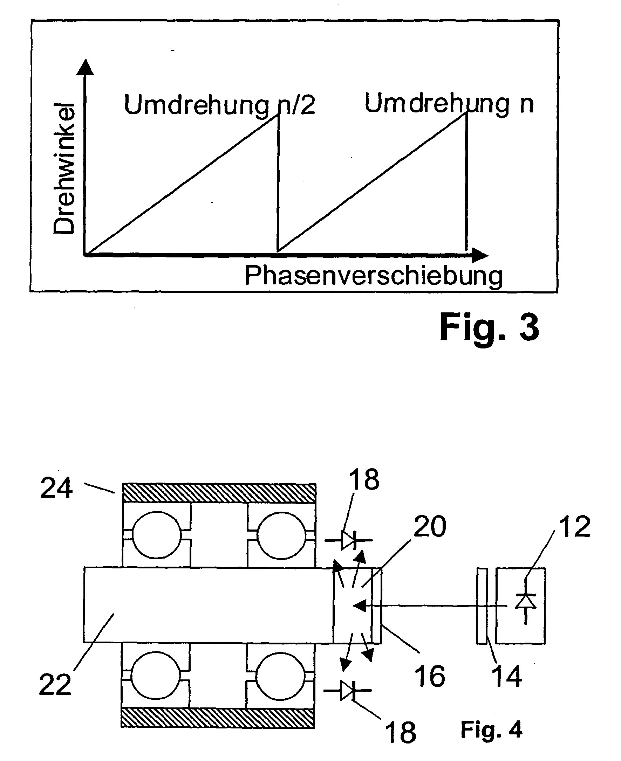

In der Ausführung der Figur 1, die schematisch auch in Figur 4 gezeigt ist, wird der Drehwinkel, bzw. eine vom Drehwinkel abhängige Größe eines rotierenden Objektes 10, z.B. einer sich drehenden Welle gegenüber einem Bezugssystem, z.B. einem Motorgehäuse gemessen.

Ein feststehend angeordneter Sender 12 sendet wenigstens zwei, im vorliegenden Ausführungsbeispiel vier linear polarisierte Lichtstrahlen a, b, c und d aus. Die Lichtstrahlen a, b, c und d verlaufen im Wesentlichen achsparallel zu einer Mittelachse und sind jeweils mit einem gegenseitigen Winkelabstand von 90° um diese Mittelachse angeordnet. Zur Erzeugung der Lichtstrahlen a, b, c, d dienen jeweils Lichtquellen 12.1, 12.2, 12.3, 12.4, die vorzugsweise Kollimatorlinsen aufweisen. Die Lichtstrahlen a, b, c, d treten durch einen feststehend vor dem Sender 12 angeordneten Polarisator 14, der aus vier Polarisationsfiltern (Polfilter) 14.1, 14.2, 14.3, 14.4 zusammengesetzt ist. Die Polfilter sind in einem Array in vier Quadranten um die Mittelachse angeordnet, die in ihrer Winkelposition den Lichtquellen 12.1, 12.2, 12.3 und 12.4 entsprechen. Die Polarisationsebenen der Polfilter 14.1, 14.2., 14.3, 14.4 sind jeweils aufeinanderfolgend um 45° gegeneinander verdreht. Dementsprechend sind die Lichtstrahlen a, b, c, d nach dem Durchtritt durch den Polarisator 14 linear polarisiert, wobei ihre Polarisationsebenen jeweils aufeinanderfolgend um 45° gegeneinander verdreht sind.

Die Mittelachse des Senders 12 ist im Wesentlichen axial fluchtend mit der Rotationsachse des rotierenden Objektes 10 ausgerichtet. Zentrisch zu der Rotationsachse des rotierenden Objektes 10, z.B. zur Wellenachse ist im Auftreffbereich der Lichtstrahlen a, b, c, d ein Analysator angeordnet, der sich mit dem Objekt 10 dreht. Der Analysator besteht im Ausführungsbeispiel der Figuren 1 und 4 aus einem Polfilter 16 z.B. aus einer Polarisationsfolie, die fest auf dem rotierenden Objekt 10 aufgebracht ist. Das durch den Polfilter 16 hindurchtretende Licht gelangt in einen Empfänger 18, der die Intensität des durch den Polfilter 16 durchtretenden Lichtes misst und in ein entsprechendes elektrisches Signal umwandelt. Der Empfänger 18 weist vorzugsweise eine Fotodiode auf.

Der Empfänger 18 kann in axialer Richtung hinter dem Polfilter 16 angeordnet sein. Ist das rotierende Objekt 10 rohrförmig, so kann der Empfänger 18 feststehend koaxial in dem rotierenden Objekt angeordnet sein. Dreht sich der Empfänger 18 mit dem Objekt 10 und dem Polfilter 16, so müssen die Empfängersignale induktiv oder kapazitiv ausgekoppelt werden.

In dem Ausführungsbeispiel der Figuren 1 und 4 ist jedoch zwischen dem Polfilter 16 und dem rotierenden Objekt eine Streuscheibe 20 angeordnet, die beispielsweise aus Glas oder einem Kunststoff besteht. Wie aus den Figuren 1 und 4 ersichtlich ist, ist die Streuscheibe 20 vorzugsweise auf die axiale Stirnfläche des rotierenden Objektes 10 aufgebracht, z.B. aufgeklebt, während der Polfilter 16 wiederum auf die dem Sender 12 zugewandte Stirnfläche der Streuscheibe 20 aufgebracht ist, z.B. als Folie aufgeklebt ist. Das durch den Polfilter 16 durchtretende Licht wird in der Streuscheibe 20 diffus gestreut, so dass Streulicht radial aus der Streuscheibe 20 austritt und in den Empfänger 18 gelangt, der seitlich außerhalb der Streuscheibe 20 angeordnet ist. Da der Polfilter 16 und die Streuscheibe 20 rotationssymmetrisch zur Drehachse des Objektes 10 angeordnet sind, ist die Intensität des radial aus der Streuscheibe 20 austretenden Streulichtes vom Drehwinkel unabhängig, so dass der Empfänger 18 ortsfest angeordnet werden kann.

Der Vorteil der Anordnung in der Ausführung der Figuren 1 und 4 besteht insbesondere darin, dass die Lichtquellen des Senders 12 und der Empfänger 18 ortsfest angeordnet sind und somit ortsfest elektrisch angeschlossen werden können. Ein elektrischer Anschluss der rotierenden Teile ist nicht erforderlich. Außerdem können der Sender 12 mit dem Polarisator 14 sowie der Polfilter 16 mit der Streuscheibe 20 zentrisch und mit kleinen radialen Messungen ausgeführt werden, so dass eine Miniaturisierung der Vorrichtung möglich ist. Eine exakt axial fluchtende Ausrichtung von Sender 12 und Polfilter 16 ist nicht erforderlich, so dass diese Elemente unabhängig voneinander und ohne größeren Justieraufwand montiert werden können.

Zur Messung des Drehwinkels des rotierenden Objektes 10 werden die Lichtquellen 12.1, 12.2, 12.3 und 12.4 des Senders 12 in ihrer Sendeleistung sinusförmig moduliert, so dass auch die Intensität der Lichtstrahlen a, b, c, d sinusförmig moduliert wird. Die Modulation erfolgt dabei in der Weise, dass der zeitliche Intensitätsverlauf der Lichtstrahlen a, b, c, d jeweils in der Phase um 90° gegenüber dem jeweils vorangehenden Lichtstrahl verschoben ist. Wird die Intensitätsamplitude der Lichtstrahlen mit $U_0$ und die Modulationsfrequenz mit $\omega_0$ bezeichnet, so ergeben sich für die Lichtstrahlen folgende Intensitätsfunktionen:

$$(1) \quad a = U_0 \, (1 + \sin\omega_0 t)$$
$$b = U_0 \, (1 + \cos\omega_0 t)$$
$$c = U_0 \, (1 - \sin\omega_0 t)$$
$$d = U_0 \, (1 - \cos\omega_0 t)$$

Die jeweils in der linearen Polarisation gegeneinander gedrehten Lichtstrahlen a, b, c, d treten durch den Polfilter 16 des Analysators ungeschwächt hindurch, wenn die Polarisationsebene des rotierenden Polfilters 16 mit der Polarisationsebene des jeweiligen Lichtstrahles zusammenfällt. Steht die Polarisationsebene des Polfilters 16 senkrecht zu der Polarisationsebene der Lichtstrahlen, so werden diese jeweils nicht durchgelassen. In Abhängigkeit von dem Drehwinkel $\varphi$ des Polfilters 16 ergeben sich die Intensitäten der einzelnen Lichtstrahlen a, b, c, d hinter dem Polfilter 16 zu

$$(2) \quad a(\varphi) = U_0 \, (1 + \sin\omega_0 t) \, (1 + \sin\varphi)$$
$$b(\varphi) = U_0 \, (1 + \cos\omega_0 t) \, (1 + \cos\varphi)$$
$$c(\varphi) = U_0 \, (1 - \sin\omega_0 t) \, (1 - \sin\varphi)$$
$$d(\varphi) = U_0 \, (1 - \cos\omega_0 t) \, (1 - \cos\varphi)$$

Da die Polarisationsebenen des Polfilters und der Lichtstrahlen jeweils nach einer Drehung des Polfilters um 180° zusammenfallen, gilt für den Drehwinkel $\theta$ des rotierenden Objekts 10 folglich $\theta = 2\varphi$.

Die Gesamtmenge X des von dem Polfilter 16 durchgelassenen und in der Streuscheibe 20 gestreuten Lichtes ergibt sich aus der Summe der bei diesem Drehwinkel $\varphi$ durchtretenden Intensitäten sämtlicher Strahlen a, b, c, d und somit zu

$$(3) \quad X = a(\varphi) + b(\varphi) + c(\varphi) + d(\varphi)$$

$$= U_0(1 + \sin\omega_0 t + \sin\varphi + \sin\omega_0 t \cdot \sin\varphi) +$$

$$U_0(1 + \cos\omega_0 t + \cos\varphi + \cos\omega_0 t \cdot \cos\varphi) +$$

$$U_0(1 - \sin\omega_0 t - \sin\varphi + \sin\omega_0 t \cdot \sin\varphi) +$$

$$U_0(1 - \cos\omega_0 t - \cos\varphi + \cos\omega_0 t \cdot \cos\varphi)$$

$$= U_0(4 + 2(\sin\omega_0 t \sin\varphi + \cos\omega_0 t \cdot \cos\varphi))$$

Wendet man hierauf die Umrechnungstheroreme der Trigonometrie

$$(4) \quad \sin\alpha \cdot \sin\beta = \tfrac{1}{2}(\cos(\alpha-\beta) - \cos(\alpha+\beta))$$

$$\cos\alpha \cdot \cos\beta = \tfrac{1}{2}(\cos(\alpha-\beta) + \cos(\alpha+\beta))$$

an, so erhält man für die gemessene Lichtintensität die Formel

$$(5) \quad X = U_0(4 + \cos(\omega_0 t-\varphi) - \cos(\omega_0 t+\varphi) + \cos(\omega_0 t-\varphi) + \cos(\omega_0 t+\varphi))$$

$$X = U_0(4 + 2\cos(\omega_0 t-\varphi))$$

Entsprechend der empfangenen Lichtintensität erhält man somit ein Signal des Empfängers 18, welches sinusförmig ist, die Modulationsfrequenz $\omega_0$ der Lichtstrahlen a, b, c, d enthält und entsprechend dem Drehwinkel $\varphi$ des Polfilters 16 und damit des rotierenden Objektes 10 in der Phase verschoben ist. Dabei verschiebt sich die Phase pro Umdrehung des Objektes 10 bzw. Polfilters 16 jeweils um eine Periode. Die aktuelle momentane Phasenverschiebung des Empfängersignals stellt somit ein Maß für den aktuellen Drehwinkel im jeweiligen Zeitpunkt dar. Die Zahl der Perioden, um welche das Empfängersignal in der Phase verschoben wird entspricht der Zahl der Umdrehung des Objektes 10.

Wählt man beispielsweise eine Modulationsfrequenz für die Lichtstrahlen a, b, c, d von $\omega_0$ = 1 MHz und dreht sich das Objekt 10, z. B. eine Motorwelle mit 6.000 Umdrehungen/Minute bzw. 100 Umdrehungen/Sekunde, so ergibt sich eine Phasenverschiebung von 100 Perioden pro Sekunde und damit ein Empfängerausgangssignal mit einer Frequenz von 999.900 Hz.

Fig. 2 zeigt entsprechend schematisch die Abhängigkeit der Frequenz des gemessenen Empfängersignals X von der Drehzahl des Objektes 10.

Fig. 3 zeigt den Zusammenhang zwischen dem Drehwinkel $\varphi$ des Profilfilters 16 und der Phasenverschiebung des Empfängersignals über eine Umdrehung des rotierenden Objektes 10.

Die in Figur 1 gezeigte Ausführung mit vier Lichtstrahlen, die sinusförmig und in der Phase um 90° gegeneinander versetzt moduliert sind und deren lineare Polarisation um jeweils 45° verdreht ist, ermöglicht eine besonders einfache Signalauswertung, wie die vorstehende trigonometrische Herleitung zeigt. Es ist für den Fachmann aber klar, dass die Erfindung auch mit einer anderen Anzahl von Lichtstrahlen, mit einer anderen Modulation und mit einer anderen Phasenverschiebung der Modulation realisiert werden kann und ebenso mit einer um andere Winkel versetzten linearen Polarisation der Lichtstrahlen. Dies ist in der Regel jedoch mit aufwendigeren Auswertealgorithmen verbunden. Einfache Lösungen ergeben sich jedoch auch bei zwei Lichtstrahlen. Dieselbe oben beschriebene einfache Auswertung ergibt sich auch, wenn die Anzahl der Lichtstrahlen ein Mehrfaches von vier beträgt. Dann ergeben sich eine entsprechende Anzahl von Perioden der Phasenverschiebung pro Umdrehung des rotierenden Objektes.

In Figur 4 ist nochmals in einem schematischen Axialschnitt die Vorrichtung der Figur 1 gezeigt. Dabei sind der Sender 12, der Polarisator 14 und die Lichtstrahlen nur schematisch gezeigt, ohne die Aufteilung in vier Lichtquellen, vier Polarisatorfelder und vier Lichtstrahlen zu zeigen. Figur 4 zeigt den kompakten Aufbau der Vorrichtung, der minimale Abmessungen ermöglicht. Insbesondere können der Polfilter 16 und die Streuscheibe 20 auf der axialen Stirnfläche der Welle 22 eines Motors 24 angeordnet werden. Weiter zeigt Figur 4, dass auch mehrere Empfänger 18, z. B. Fotodioden um die Streuscheibe 20 herum angeordnet sein können, um eine bessere Lichtausbeute und damit ein besseres Empfangssignal zu erhalten.

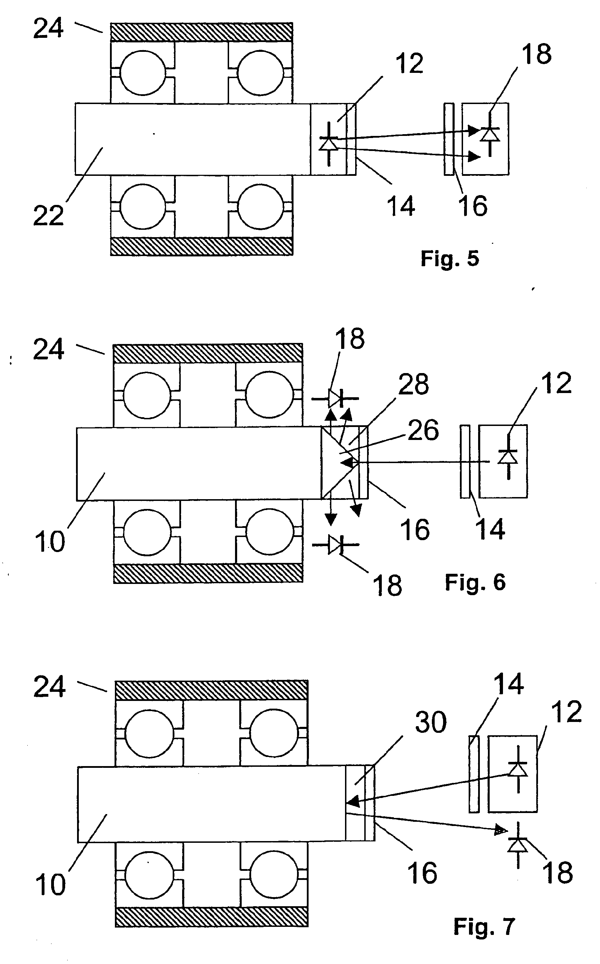

Figur 5 zeigt eine zweite Ausführung. In dieser Ausführung sind der Sender 12 und der Polarisator 14 fest an dem rotierenden Objekt, z.B. der Welle 22 des Motors 24 angebracht und rotieren mit der Welle 22. Der Analysator ist dementsprechend ortsfest angeordnet. Der z.B. durch einen Polfilter 16 gebildete Analysator kann unmittelbar auf dem ortsfest angeordneten Empfänger 18 angebracht sein. Da in diesem Falle die Lichtquellen und ihre Modulationsschaltung mit der Welle 22 rotieren, ist eine kapazitive oder induktive Energieeinspeisung in die rotierende Schaltung erforderlich.

Figur 6 zeigt eine dritte Ausführung, die eine Abwandlung der Ausführung der Figuren 1 und 4 darstellt. Um das durch den Polfilter 16 des Analysators durchtretende Licht radial nach außen in den Empfänger 18 bzw. die Empfänger 18 umzulenken, ist hinter dem Polfilter 16 koaxial ein konischer Spiegel 26 angeordnet. Der Spiegel 26 kann beispielsweise in einem zu dem rotierenden Objekt 10 koaxialen transparenten Zylinder 28 eingegossen sein, auf dessen Stirnfläche der Polfilter 16 angebracht ist. Dadurch ergibt sich eine bessere Lichtausbeute als bei der diffusen Streuung durch die Streuscheibe 20. Der konische Spiegel 26 vergrößert jedoch die axiale Baulänge gegenüber der Streuscheibe 20.

Figur 7 zeigt eine vierte Ausführung, die eine Abwandlung der Ausführung der Figur 6 darstellt. Hinter dem Polfilter 16 ist ein zu diesem paralleler Spiegel 30 angeordnet. Das durch den Polfilter 16 durchtretende Licht wird durch diesen Spiegel 30 zurückreflektiert und gelangt in den Empfänger 18, der in diesem Fall neben dem Sender 12 angeordnet ist.

Es ist für den Fachmann ohne weiteres klar, dass als Analysator nicht nur ein Polarisationsfilter verwendet werden kann, sondern auch eine andere polarisationsempfindliche Einrichtung, die das polarisierte Licht in Abhängigkeit vom Drehwinkel durchlässt oder reflektiert.

Bezugszeichenliste

| 10 | rotierendes Objekt |
| 12 | Sender |
| 14 | Polarisator |
| 16 | Polfilter |
| 18 | Empfänger |
| 20 | Streuscheibe |
| 22 | Welle |
| 24 | Motor |
| 26 | Spiegel |
| 28 | Zylinder |
| | |
| a | Lichtstrahl |
| b | Lichtstrahl |
| c | Lichtstrahl |
| d | Lichtstrahl |

**Patentansprüche**

1. Verfahren zur Messung des Drehwinkels zwischen zwei relativ zueinander rotierenden Objekten, wobei ein dem einen Objekt (10) zugeordneter Sender (12) linear polarisiertes Licht aussendet, wobei dieses Licht durch einen Analysator auf einen Empfänger (18) trifft, wobei sich der Sender (12) und der Analysator in Abhängigkeit vom Drehwinkel relativ zueinander drehen, wobei die vom Empfänger gemessene Lichtintensität als drehwinkelabhängiges Signal ausgewertet wird,
wobei der Sender (12) vier linear polarisierte Lichtstrahlen (a, b, c, d) aussendet, die mit einem gegenseitigem Winkelabstand von 90° angeordnet sind, wobei die Polarisationsebenen der Lichtstrahlen (a, b, c, d) jeweils um 45° gegeneinander verdreht sind, und wobei der Sender (12) vier Lichtquellen aufweist, welche in ihrer Sendeleistung so moduliert werden, dass die Intensität dieser Lichtstrahlen (a, b, c, d) jeweils um 90° gegeneinander phasenverschoben periodisch moduliert wird.

2. Verfahren nach Anspruch 1,
wobei die Intensität der Lichtstrahlen (a, b, c, d) sinusförmig moduliert wird.

**3.** Verfahren nach Anspruch 1,
wobei die Intensität der Lichtstrahlen (a, b, c, d) rechteckförmig moduliert wird.

**4.** Vorrichtung zur Messung des Drehwinkels zwischen zwei relativ zueinander rotierenden Objekten, mit einem dem einen Objekt zugeordneten Sender (12), der linear polarisiertes Licht aussendet, mit einem polarisationsempfindlichen Analysator, wobei sich der Sender und der Analysator in Abhängigkeit vom Drehwinkel relativ zueinander drehen, und mit einem Empfänger (18), der die durch den Analysator durchtretende Lichtintensität misst, um ein drehwinkelabhängiges Signal zu erzeugen,
bei welcher der Sender (12) vier in gleichem Winkelabstand um die Drehachse angeordnete Lichtquellen (12.1, 12.2, 12.3, 12.4) aufweist, die linear polarisierte Lichtstrahlen (a, b, c, d) aussenden, bei welcher die Polarisationsebenen dieser Lichtstrahlen (a, b, c, d) jeweils um 45° gegeneinander verdreht sind und bei welcher die Lichtquellen in ihrer Sendeleistung so moduliert werden, dass die Intensität dieser Lichtstrahlen (a, b, c, d) jeweils um 90° gegeneinander phasenverschoben periodisch moduliert wird.

**5.** Vorrichtung nach Anspruch 4,
bei welcher der Analysator einen Polarisationsfilter (16) aufweist.

**6.** Vorrichtung nach Anspruch 4 oder 5,
bei welcher der Sender (12) mit den Lichtquellen (12.1, 12.2, 12.3, 12.4) feststehend angeordnet ist und sich der Analysator dreht.

**7.** Vorrichtung nach Anspruch 4 oder 5,
bei welcher sich der Sender (12) mit den Lichtquellen (12.1, 12.2, 12.3, 12.4) dreht und der Analysator feststehend angeordnet ist.

**8.** Vorrichtung nach Anspruch 6 oder 7,
bei welcher der Empfänger (18) in Strahlrichtung hinter dem Polarisationsfilter (16) angeordnet ist.

**9.** Vorrichtung nach Anspruch 8,
bei welcher der Empfänger (18) feststehend hinter dem rotierenden Polarisationsfilter (16) angeordnet ist.

**10.** Vorrichtung nach Anspruch 8,
bei welcher sich der Empfänger (18) mit dem Polarisationsfilter (16) dreht und die Empfängersignale induktiv oder kapazitiv ausgekoppelt werden.

**11.** Vorrichtung nach Anspruch 6,
bei welcher hinter dem Analysator eine sich mit dem Analysator drehende Lichtumlenkeinheit angeordnet ist, die das durch den Analysator durchtretende Licht in den Empfänger (18) ablenkt.

**12.** Vorrichtung nach Anspruch 11,
bei welcher die Lichtumlenkeinheit das durch den Analysator durchtretende Licht radial zur Drehachse ablenkt und der Empfänger (18) radial außerhalb der Lichtumlenkrichtung angeordnet ist.

**13.** Vorrichtung nach Anspruch 12,
bei welcher die Lichtumlenkeinrichtung eine Streuscheibe (20) ist.

**14.** Vorrichtung nach Anspruch 12,
bei welcher die Lichtumlenkeinrichtung ein Spiegel (26) ist.

**15.** Vorrichtung nach Anspruch 11,
bei welcher die Lichtumlenkeinrichtung ein zur Drehachse senkrechter Spiegel (30) ist und der Empfänger (18) sich auf der Seite des Senders (12) befindet.

**Claims**

**1.** A method of measuring the angle of rotation between two objects rotating relative to each other, wherein a transmitter (12) associated with one object (10) emits linearly polarized light, wherein this light strikes a receiver (18) through an analyser, wherein the transmitter (12) and the analyser rotate relative to each other in a manner dependent upon the angle of rotation, wherein the light intensity measured by the receiver is evaluated as a signal dependent upon the angle of rotation,

wherein the transmitter (12) emits four linearly polarized light beams (a, b, c, d) which are arranged at an angular distance of 90° with respect to one another, wherein the polarization planes of the light beams (a, b, c, d) are rotated by 45° in each case with respect to one another, and wherein the transmitter (12) has four light sources which are modulated in their transmission power in such a way that the intensity of these light beams (a, b, c, d) is modulated periodically in a manner phase-shifted by 90° in each case with respect to one another.

2. A method according to claim 1, wherein the intensity of the light beams (a, b, c, d) is modulated in a sinusoidal manner.

3. A method according to claim 1, wherein the intensity of the light beams (a, b, c, d) is modulated in a rectangular manner.

4. An apparatus for measuring the angle of rotation between two objects rotating relative to each other, with a transmitter (12) which is associated with one object and which emits linearly polarized light, with an analyser sensitive to polarization, wherein the transmitter and the analyser rotate relative to each other in a manner dependent upon the angle of rotation, and with a receiver (18) which measures the light intensity passing through the analyser in order to generate a signal dependent upon the angle of rotation,

in which the transmitter (12) has four light sources (12.1, 12.2, 12.3, 12.4) which are arranged at the same angular interval about the axis of rotation and which emit linearly polarized light beams (a, b, c, d), in which the polarization planes of these light beams (a, b, c, d) are rotated by 45° in each case with respect to one another, and in which the light sources are modulated in their transmission power in such a way that the intensity of these light beams (a, b, c, d) is modulated periodically in a manner phase-shifted by 90° in each case with respect to one another.

5. An apparatus according to claim 4, in which the analyser has a polarization filter (16).

6. An apparatus according to claim 4 or 5, in which the transmitter (12) with the light sources (12.1, 12.2, 12.3, 12.4) is arranged stationary and the analyser rotates.

7. An apparatus according to claim 4 or 5, in which in which the transmitter (12) with the light sources (12.1, 12.2, 12.3, 12.4) rotates and the analyser is arranged stationary.

8. An apparatus according to claim 6 or 7, in which the receiver (18) is arranged behind the polarization filter (16) in the radiation direction.

9. An apparatus according to claim 8, in which the receiver (18) is arranged stationary behind the rotating polarization filter (16).

10. An apparatus according to claim 8, in which the receiver (18) rotates with the polarization filter (16) and the receiver signals are decoupled in an inductive or capacitive manner.

11. An apparatus according to claim 6, in which a light deflection unit, which rotates with the analyser and which deflects the light passing through the analyser into the receiver (18), is arranged behind the analyser.

12. An apparatus according to claim 11, in which the light deflection unit deflects the light passing through the analyser radially with respect to the axis of rotation, and the receiver (18) is arranged radially outside the light deflection direction [sic].

13. An apparatus according to claim 12, in which the light deflection device is a spreading disc (20).

14. An apparatus according to claim 12, in which the light deflection device is a mirror (26).

15. An apparatus according to claim 11, in which the light deflection device is a mirror (30) at a right angle to the axis of rotation, and the receiver (18) is situated at the side of the transmitter (12).

**EP 2 187 178 B1**

**Revendications**

1. Procédé de mesure de l'angle de rotation entre deux objets tournant l'un par rapport à l'autre, selon lequel un émetteur (12) associé à l'un des objets (10) émet de la lumière polarisée linéairement, cette lumière frappant un récepteur (18), en passant par un analyseur l'émetteur (12) et l'analyseur tournant relativement l'un à l'autre en fonction de l'angle de rotation, l'intensité lumineuse mesurée par le récepteur étant exploitée sous la forme d'un signal dépendant de l'angle de rotation,
l'émetteur (12) émettant quatre faisceaux lumineux (a, b, c, d) polarisés linéairement réciproquement situés à une distance angulaire de 90°, les plans de polarisation des faisceaux lumineux (a, b, c, d) étant respectivement tournés de 45° les uns par rapport aux autres et l'émetteur (12) comportant quatre sources lumineuses dont la puissance d'émission est modulée de sorte que l'intensité des faisceaux lumineux (a, b, c, d) soit respectivement modulée périodiquement avec un décalage de phase de 90°.

2. Procédé conforme à la revendication 1, selon lequel l'intensité des sources lumineuses (a, b, c, d) est modulée de façon sinusoïdale.

3. Procédé conforme à la revendication 1, selon lequel l'intensité des sources lumineuses (a, b, c, d) est modulée de façon rectangulaire.

4. Dispositif de mesure de l'angle de rotation entre deux objets tournant l'un par rapport à l'autre, comportant un émetteur (12) associé à l'un des objets et émettant de la lumière polarisée linéairement, un analyseur sensible à la polarisation, l'émetteur et l'analyseur tournant l'un par rapport à l'autre en fonction de l'angle de rotation ainsi qu'un récepteur (18) qui mesure l'intensité lumineuse traversant l'analyseur pour produire un signal dépendant de l'angle de rotation,
dispositif dans lequel l'émetteur (12) comporte quatre sources de lumière (12.1, 12.2, 12.3, 12.4) montées avec le même écart angulaire autour de l'axe de rotation et qui émettent des faisceaux lumineux (a, b, c, d) polarisés linéairement, les plans de polarisation de ces faisceaux lumineux (a, b, c, d) sont respectivement tournés de 45° les uns par rapport aux autres, et les puissances d'émission des sources de lumière sont modulées de sorte que les intensités des faisceaux lumineux (a, b, c, d) soient respectivement périodiquement modulées avec un décalage de phase de 90°.

5. Dispositif conforme à la revendication 4,
**caractérisé en ce que**
l'analyseur comporte un filtre de polarisation (16).

6. Dispositif conforme à la revendication 4 ou 5,
**caractérisé en ce que**
l'émetteur (12) équipé des sources de lumière (12.1, 12.2, 12.3, 12.4) est monté fixe tandis que l'analyseur est mobile en rotation.

7. Dispositif conforme à la revendication 4 ou 5, dans lequel l'émetteur (12) équipé des sources de lumière (12.1, 12.2, 12.3, 12.4) est mobile en rotation tandis que l'analyseur est monté fixe.

8. Dispositif conforme à la revendication 6 ou 7, dans lequel le récepteur (18) est monté en arrière du filtre de polarisation (16) dans la direction des faisceaux.

9. Dispositif conforme à la revendication 8, dans lequel le récepteur (18) est monté fixe en arrière du filtre de polarisation rotatif (16).

10. Dispositif conforme à la revendication 8, dans lequel le récepteur (18) est mobile en rotation avec le filtre de polarisation rotatif (16) et les signaux du récepteur sont découplés de manière inductive ou capacitive.

11. Dispositif conforme à la revendication 6, dans lequel, en arrière de l'analyseur, est montée une unité de déviation de la lumière tournant avec l'analyseur et détournant la lumière passant dans l'analyseur dans le récepteur (18).

12. Dispositif conforme à la revendication 11, dans lequel l'unité de déviation de la lumière détourne la lumière traversant l'analyseur radialement par rapport à l'axe de rotation et le récepteur (18) est monté radialement à l'extérieur de l'unité de déviation de la lumière.

**13.** Dispositif conforme à la revendication 12, dans lequel l'unité de déviation de la lumière est un diffuseur (20).

**14.** Dispositif conforme à la revendication 12, dans lequel l'unité de déviation de la lumière est un miroir (26).

**15.** Dispositif conforme à la revendication 11, dans lequel l'unité de déviation de la lumière est un miroir (30) monté perpendiculairement à l'axe de rotation et le récepteur (18) se trouve du côté de l'émetteur (12).

**Fig. 1**

**Fig. 2**

**Fig. 3**

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005031966 A1
- DE 20102192 U1